(19) **Europäisches Patentamt**

**European Patent Office**

**Office européen des brevets**

(11) **EP 0 881 789 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.$^7$: **H04B 10/158**

(21) Anmeldenummer: **98440109.1**

(22) Anmeldetag: **25.05.1998**

(54) **Empfänger für ein optisches Nachrichtenübertragungssystem, Filtervorrichtung und Verfahren zu dessen Betrieb**

Receiver for an optical telecommunication system, filter arrangement and operating method therefor

Récepteur pour système de télécommunications optique, dispositif de filtrage et procédé pour sa mise en oeuvre

(84) Benannte Vertragsstaaten:
**DE FI FR GB IT SE**

(30) Priorität: **28.05.1997 DE 19722560**

(43) Veröffentlichungstag der Anmeldung:
**02.12.1998 Patentblatt 1998/49**

(73) Patentinhaber: **ALCATEL**
**75008 Paris (FR)**

(72) Erfinder: **Pfeiffer, Thomas, Dr.**
**70569 Stuttgart (DE)**

(74) Vertreter: **Schätzle, Albin, Dipl.-Phys. et al**
**Alcatel**
**Intellectual Property Department, Stuttgart**
**70430 Stuttgart (DE)**

(56) Entgegenhaltungen:
**US-A- 5 610 746**

• **MOELLER L: "AN OPTICAL CDMA METHOD BASED ON PERIODIC SPECTRUM ENCODING" PROCEEDINGS OF THE ANNUAL CONFERENCE ON EUROPEAN FIBRE OPTIC COMMUNICATIONS AND NETWORKS (EFOC), XX, XX, 27. Juni 1995 (1995-06-27), Seiten 178-181, XP000672568**

**Beschreibung**

Die Erfindung betrifft einen optischen Empfänger für ein optisches Nachrichtenübertragungssystem gemäß dem Oberbegriff des Anspruchs 1, eine optische Filtervorrichtung zur Verwendung in einem optischen Nachrichtenübertragungssystem gemäß dem Oberbegriff des Anspruchs 6 sowie ein Verfahren zum Betrieb dieses Nachrichtenübertragungssystems gemäß dem Oberbegriff des Anspruchs 7.

In einem Konferenzartikel von L. Möller ("An Optical CDMA Method Based on Periodic Spectrum Encoding", presented on the Thirteenth Annual Conference on European Fibre Optic Communications and Networks, Brighton, England, 1995, S.178-181) wird ein asynchrones Nachtrichtenübertragungssystem beschrieben, welches noch einer auf periodischer Spektralkodierung basierenden CDMA-Methode (code-division multiple access) arbeitet. Dabei werden die verwendeten Kodewörter für den Zugriff durch verschiedene Filterfunktionen (Durchlaßfunktionen) periodischer Filter realisiert. Die Methode nutzt eine bestimmte periodische spektrale Filterung breitbandiger optischer Signalquellen, wobei ein Nachrichtensignal in einem Empfänger nur dann empfangen und verarbeitet werden kann, wenn die Periodizitäten der Filterfunktionen von Sender und Empfänger übereinstimmen.

In dem geschilderten Nachrichtenübertragunssystem tritt Nebensprechen auf, wenn mehrere Sender gleichzeitig mit im Abstimmbereich aneinander angrenzenden Filterfunktionen senden.

Es ist daher eine Aufgabe der vorliegenden Erfindung, einen optischen Empfänger für ein Nachrichtenübertragungssystem der geschilderten Art anzugeben, bei dem Nebensprechen von im Abstimmbereich benachbarten Sendern vermindert ist. Weitere Aufgaben sind, eine optische Filtervorrichtung zur Verwendung in einem solchen optischen Nachrichtenübertragungssystem sowie ein Verfahren zum Betrieb dieses Nachrichtenübertragungssystems anzugeben.

Die Aufgabe wird hinsichtlich des Empfängers gelöst durch die Merkmale des Patentanspruchs 1, hinsichtlich der Filtervorrichtung durch die Merkmale des Patentanspruchs 6 und hinsichtlich des Verfahrens durch die Merkmale des Patentanspruchs 7. Vorteilhafte Ausgestaltungen sind den abhängigen Ansprüchen zu entnehmen.

Die Erfindung hat den Vorteil, daß die Anzahl der Sender, die gleichzeitig und unabhängig voneinander senden können höher ist als bisher, ohne daß es zu Nebensprechen kommt.

Ein weiterer Vorteil liegt darin, daß auch bei Abweichung der Filterfunktionen von Sender und Empfänger von entsprechenden Sollfilterfunktionen kein Nebensprechen auftritt.

Im folgenden wird die Erfindung anhand der Figuren 1-8 in einem Ausführungsbeispiel erläutert. Es zeigt:

Fig.1    Ein optisches Nachrichtenübertragungssystem mit Sendern und einem Empfänger,
Fig.2    ein optisches Nachrichtenübertragungssystem mit einem Sender und einem Empfänger,
Fig.3    ein Empfänger in einem Ausführungsbeispiel,
Fig.4    eine Abstimmkurve bei Verstimmung des Empfängerfilters ohne Vorfilter,
Fig.5    eine Abstimmkurve bei Verstimmung des Empfängerfilters ohne Vorfilter und bei mehreren Sendern,
Firg.6    eine Abstimmkurve bei Verstimmung des Empfängerfilters mit Vorfilter,
Firg.7    eine Abstimmkurve bei Verstimmung des Empfängerfilters mit Vorfilter und bei mehreren Sendern und
Fig.8    den Verlauf der Filterfunktion eines Vorfilters

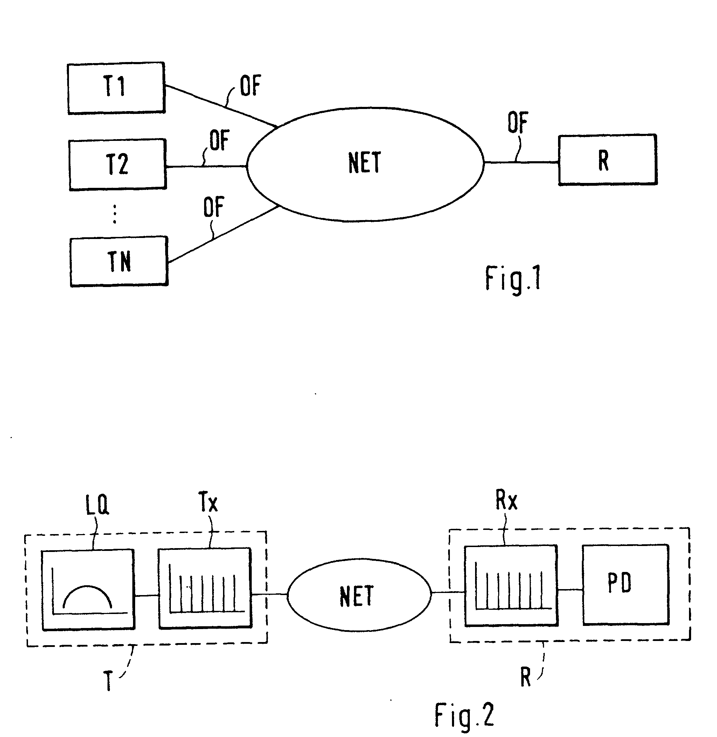

Ein optisches Nachrichtenübertragungssystem ist in Figur 1 gezeigt. Es besteht aus N optischen Sendern T1, ..., TN und einem optischen Empfänger R, die untereinander über ein optisches Nachrichtenübertragungsnetz NET und optische Fasern OF verbunden sind. Das Nachrichtenübertragungssystem kann auch weitere optische Empfänger enthalten.

In dem Nachrichtenübertragungssystem werden optische Nachrichtensignale kodiert übertragen. Die Kodierung erfolgt durch eine Filterung von mit der zu übertragenden Nachricht modulierten Lichtsignalen im Sender. Dazu wird ein periodischer Filter, beispielsweise ein Fabry-Perot-Interferometer oder ein Mach-Zehnder-Interferometer verwendet. Die Dekodierung im Empfänger erfolgt durch Filterung der empfangenen Nachrichtensignale mit einem gleichartigen Filter. Dabei müssen die Periodizitäten der Filterfunktionen von Senderfilter und Empfängerfilter übereinstimmen, denn nur dann wird am Ausgang des Empfängerfilters ein Signal erhalten. Hierbei ist es vorteilhaft, wenn die Filter von Sender und Empfänger polarisationsunabhängig arbeiten.

Bei dieser Anordnung können alle Sender gleichzeitig und asynchron im gleichen Frequenzband Nachrichtensignale senden, die dann alle unabhängig von einander von einem oder mehreren Empfängern empfangen werden können. Es handelt sich also um ein Kodemultiplex-Verfahren (CDMA: code-division multiple access), wobei der Kode zum Zugriff auf ein bestimmtes Nachrichtensignal durch die Filterfunktion des periodischen Filters im Sender und Empfänger realisiert ist. Die einzelnen Sender müssen dazu jeweils Filterfunktionen mit unterschiedlicher Periodizität verwenden, damit sie nicht den Kode eines anderen Senders stören. Die einzelnen Nachrichtensignale verschiedener Sender mit Filterfunktionen unterschiedlicher Periodizitäten werden im folgenden als Kanäle bezeichnet.

Ein Sender T und ein Empfänger R, die über das Nachrichtenübertragungsnetz NET verbunden sind, sind in Figur 2 detaillierter gezeigt. Der Sender T enthält eine breitbandige Signallichtquelle LQ, beispielsweise eine Leuchtdiode (LED) mit einem Wellenlängenspektrum von 1520 bis 1580 nm oder auch einen Multi-Mode-Laser, und einen Filter Tx. Der Empfänger hat eine Filtervorrichtung Rx, an deren Ausgang eine optische Empfangseinheit PD, beispielsweise ein Photodetektor oder eine Photodiode, angeschlossen ist.

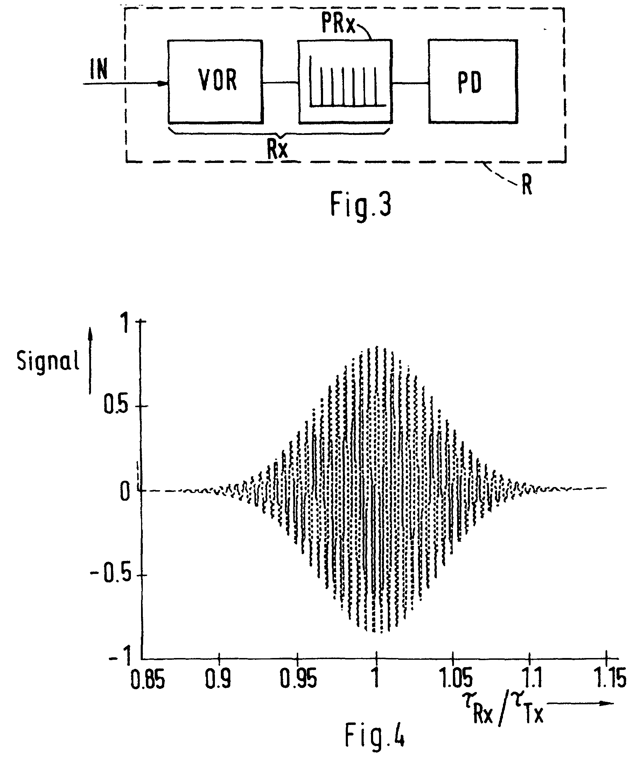

In Figur 3 ist ein erfindungsgemäßer Empfänger R in einem Ausführungsbeispiel gezeigt. Ein Vorfilter VOR ist mit einem optischen Eingang IN verbunden, der über eine optische Faser an das Nachrichtenübertragungsnetz anschließbat ist. An den Ausgang des Vorfilters VOR ist der periodische Filter PRx angeschlossen. Vorfilter VOR und periodischer Filter PRx bilden zusammen die Filtervorrichtung Rx des Empfängers R. Dem periodischen Filter PRx ist die optische Empfangseinheit PD nachgeschaltet, die das Ausgangssignal des periodischen Filters PRx in ein elektrisches Signal wandelt.

Der Vorfilter hat eine Vorfilterfunktion, durch die das optische Frequenzspektrum des Nachrichtensignales in der Weise verändert wird, daß dessen Cosinustransformierte auf einen bestimmten Bereich einer Abstimmkurve begrenzt ist. Mit Filterfunktion ist die Durchlaßfunktion eines Filters bezeichnet, d.h. die Funktion, die in Abhängigkeit der Frequenz f eines eingestrahlten Signales angibt, welcher Anteil des Signales durch den Filter durchgelassen wird. Die Abstimmkurve ist die Kurve, nach der die empfangene Gesamtleistung des Nachrichtensignales bei Verstimmung des periodischen Empfängerfilters PRx gegen den Senderfilter Tx (Sollfilterfunktion) abnimmt.

Für die empfangene optische Leistung im Empfänger gilt:

$$P_{Rx} = \int_0^\infty S(f) \cdot T_{Tx}(f) \cdot T_{Rx}(f) \cdot df \qquad (1)$$

wobei $T_{Tx}(f)$ die Filterfunktion des Sendefilters, $T_{Rx}(f)$ die Filterfunktion des Empfängerfilters und S(f) die spektrale Leistungsdichte der Signallichtquelle im Sender ist.

Für ein Mach-Zehnder-Interferometer ist die Filterfunktion T(f) gegeben durch:

$$T(f) \propto 1 + \cos(2\pi f\tau) \qquad (2)$$

Bei der Verwendung anderer Filter als Senderfilter, beispielsweise eines Fabry-Perot-Interferometers, eines Michelson-Interferometers, eines Lyot-Filters oder eines Arrayed Waveguide Grating, gilt ähnliches, wie sich durch Entwicklung in eine Fourrierreihe zeigen läßt. Hierbei treten je nach Filtertyp höhere Terme in $\tau$ auf, die geringe Abweichungen von der im folgenden beschriebenen Abstimmkurve bewirken.

Mit $\tau$ ist die Umlaufzeit des Filters bezeichnet und ist der Kehrwert des FSR (Free Spectral Range). Sie stellt eine Kenngröße des Filters dar und ist der Laufzeitunterschied zweier auf unterschiedlichen Wegen durch den Filter gelaufener, interferierender Lichtwellen. Im Falle des Mach-Zehnder-Interferometers ist die Umlaufzeit der Laufzeitunterschied einer Lichtwelle zwischen den beiden Interferometerzweigen. Im Falle des Fabry-Perot-Interferometers ist die Umlaufzeit der Gangunterschied einer Lichtwelle zwischen den beiden Spiegelflächen des Interferometers, d. h. die Differenz zwischen den Laufzeiten einer einmal zwischen den Spiegelflächen hin- und hergespiegelten Lichtwelle und einer direkt transmittierten Lichtwelle.

Aus den Beziehungen (1) und (2) folgt, daß die Abstimmkurve, also die Kurve, nach der in Abhängigkeit der Umlaufzeit $\tau$ die empfangene Gesamtleistung des Nachrichtensignales zu- oder abnimmt, bis auf einen konstanten Offset die Cosinustransformierte der spektralen Verteilung der Signallichtquelle ist: (Der konstante Offset ist abgezogen)

$$P_{Rx}(\tau) = \int_0^\infty S(f) \cdot T_{Tx}(f) \cdot \cos(2\pi f\tau) df \qquad (3)$$

Für eine gaußförmige spektrale Verteilung der Signallichtquelle ist die Abstimmkurve ohne Verwendung eines Vorfilters VOR in Figur 4 dargestellt. Als Abszisse ist der Abstimmbereich, d.h. die relative Verstimmung des periodischen Empfängerfilters gegen den Senderfilter, ausgedrückt als Quotient der Umlaufzeiten der Filter $\tau_{Rx}/\tau_{Tx}$ aufgetragen. Als Ordinate ist die auf die Gesamtleistung der Lichtquelle normierte Empfangsleistung aufgetragen, wobei der konstante Offset bereits abgezogen ist. Die Abstimmkurve weist deutlich erkennbare scharfe Maxima und Minima auf, während die Einhüllende der Abstimmkurve nur langsam gegen Null strebt. Aus der Beziehung (3) folgt, daß die Einhüllende bei einer gaußförmigen spektralen Verteilung ebenfalls eine Gaußkurve ist.

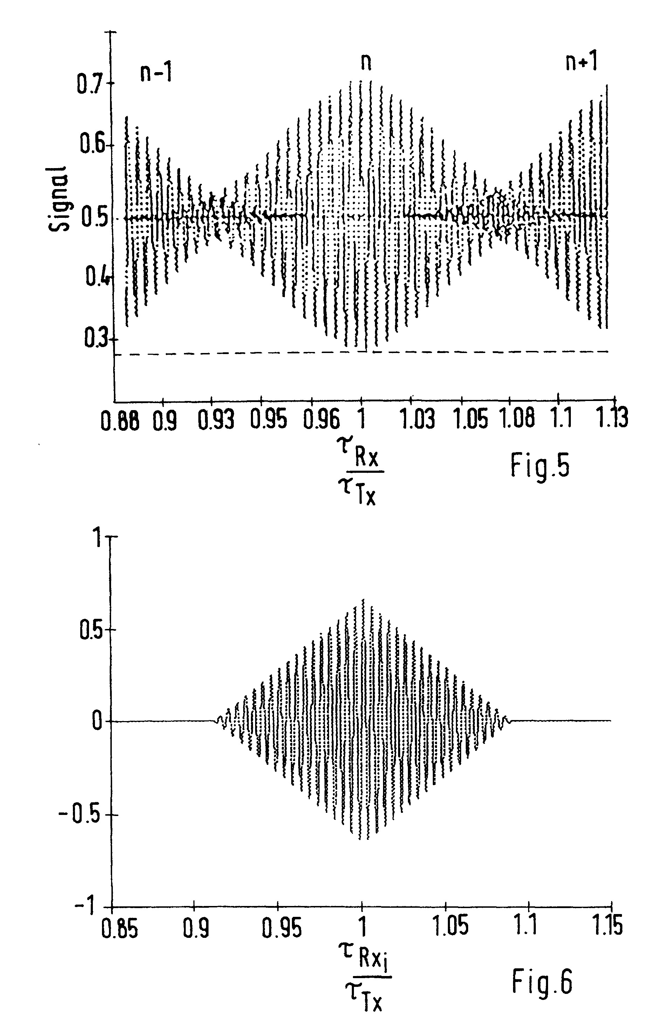

Senden zwei oder mehr Sender, deren Filterfunktionen im Abstimmbereich aneinander angrenzen, gleichzeitig, so überlappen deren Abstimmkurven und es kommt zu Nebensprechen. Dies ist in Figur 5 gezeigt. Hier senden drei Sender auf den Kanälen n-1, n und n+1, wodurch die Abstimmkurven zu den drei Kanälen überlappen.

Durch Verwendung des Vorfilters wird dieses Überlappen der Abstimmkurven vermieden, indem die Cosinustransformierte der spektralen Verteilung auf einen bestimmten Bereich des Abstimmbereiches begrenzt ist.

In dem Ausführungsbeispiel wird dies dadurch erreicht, daß der Vorfilter eine Vorfilterfunktion hat, die proportional zu (sin(f)/f)2 ist. Die Cosinustransformierte einer solchen Funktion ist eine Dreiecksfunktion. Daher ist die Einhüllende der Abstimmkurve eine Dreiecksfunktion. Die Abstimmkurve der Anordnung des ersten Ausführungsbeispieles ist in Figur 6 gezeigt. Es ist deutlich zu erkennen, daß die Abstimmkurve auf einen engen Bereich des Abstimmbereiches von 0,91 $<\tau_{Rx}/\tau_{Tx} <$ 1,09 begrenzt ist.

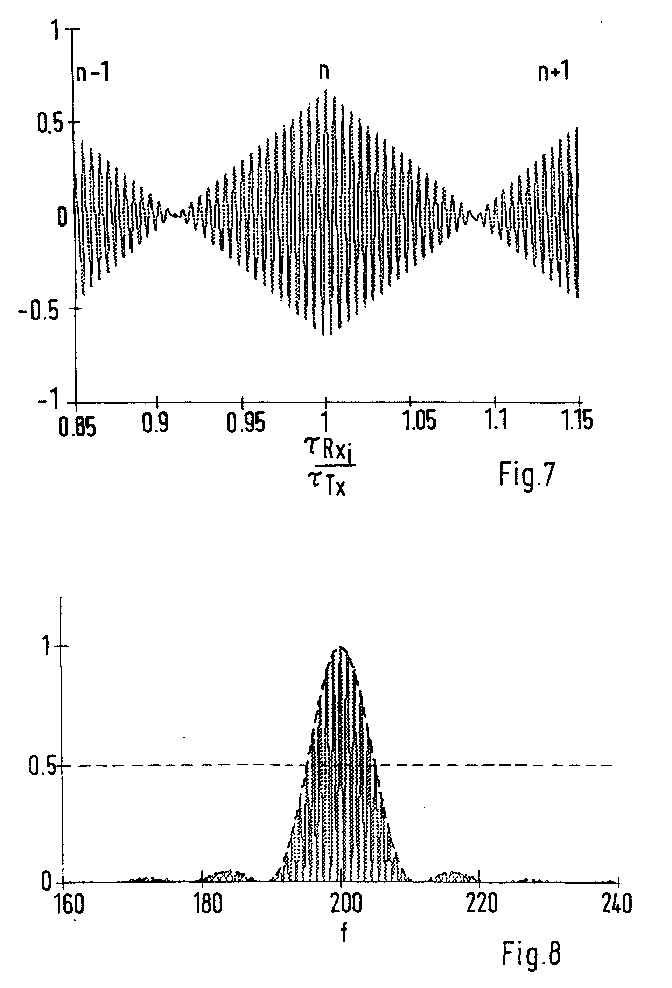

In Figur 7 sind zusätzlich zu der Abstimmkurve aus Figur 6 die Abstimmkurven für die angrenzenden Kanäle n-1 und n+1 eingetragen. Aus dem Diagramm ist deutlich zu erkennen, daß die drei Abstimmkurven nicht überlappen. Dadurch wird Nebensprechen auch bei verstimmten Filterfunktionen von Sender oder Empfänger vermieden.

Eine dreieckförmige Einhüllende der Abstimmkurve wird im Ausführungsbeispiel erreicht, indem das empfangene Nachrichtensignal im Empfänger mit dem Vorfilter gefiltert wird. Dieser hat für eine konstante Frequenzverteilung eine Vorfilterfunktion, die proportional zu (sin(f)/f)2 ist. In Figur 8 ist diese Vorfilterfunktion gezeigt. Aufgetragen ist als Abszisse der spektrale Frequenzbereich des empfangenen Nachrichtensignales in THz und als Ordinate die Transmission des Filters, d.h. der Anteil eines einfallenden Lichtsignales, der durch den Filter transmittiert. Unter dieser Transmissionskurve ist zusätzlich die Filterfunktion des periodischen Filters aufgetragen, die aus äquidistanten Bandpässen besteht.

Es können auch Vorfilter verwendet werden, die das empfangene Nachrichtensignal so verändern, daß die Einhüllende der Cosinustransformierten eine andere auf einen bestimmten Bereich des Abstimmbereiches begrenzte Funktion ist, beispielsweise eine Rechteckoder eine Trapezfunktion. Es ist allerdings zu beachten, daß die Wirkung des Vorfilters von der spektralen Verteilung der empfangenen Nachrichtensignale abhängt. Im Ausführungsbeispiel hat diese eine Gaußform, da eine zumindest in guter Näherung gaußförmige Verteilung eine häufig vorkommende Signalform ist. Es ist auch weiter zu beachten, daß die spektrale Verteilung der empfangenen Nachrichtensignale nicht zwingend mit der spektralen Verteilung der Signallichtquelle des Senders übereinstimmen muß, da die Verteilung im Nachrichtenübertragungsnetz durch optische Verstärker, Regeneratoren und andere Komponenten des Nachrichtenübertragungsnetzes verändert werden kann.

Bei einer besonders vorteilhaften Ausführungsform sind Vorfilter und periodischer Filter zu einem einzigen Filter kombiniert. Dies läßt sich beispielsweise durch ein Fabry-Perot-Interferometer erreichen. Es kann aus planparallel Glasplatten bestehen, die mit einer für Lichtwellen teildurchlässigen Beschichtung verspiegelt sind. Die Verspiegelung kann durch Aufdampfen von dielektrischen Niederschlägen erreicht werden. Durch geeignete Wahl der Beschichtung, was Beschichtungdicke, -dichte und -material anbelangt, kann eine frequenz- bzw. wellenlängenabhängige Spiegelwirkung erreicht werden, und zwar so, daß durch die frequenzabhängige Spiegelwirkung die frequenzabhängige Vorfilterfunktion realisiert wird. Andere Möglichkeiten, die Filter zu einem einzigen zu kombinieren, ergeben sich aus den Methoden der integrierten Optik auf Basis von Silizium/Silica, Lithiumniobat oder Indiumphosphid beispielweise für einen Mach-Zehnder-Interferometer. Ein einziger Filter ist einfacher im Stahlengang zu justieren, billiger herzustellen und benötigt weniger Platz.

Die erfindungsgemaße Filtervorrichtung zur Verwendung in dem optischen Nachrichtenübertragungsnetzwerk besteht aus dem Vorfilter und dem periodischen Filter. Sie kann außer in dem Empfänger auch in den Sendern eingesetzt werden. Sie dient dann nicht zum Dekodieren empfangener Nachrichtensignale, sondern zum Kodieren und Vorfiltern zu sendender Nachrichtensignale. Diese Verwendung ist dann vorteilhaft, wenn das Nachrichtenübertragungssystem wenige Sender aber eine große Anzahl von Empfängern hat und das Nachrichtenübertragungsnetz die spektrale Verteilung gesendeter Nachrichtensignale nicht oder nur wenig beeinflußt und verändert. Eine beispielhafte Anwendung ist ein Verteilnetz für breitbandige Video- oder Fernsehdienste (z.B. VoD: Video on Demand oder DVB: Digital Video Broadcasting). Bei dieser Ausführung werden in den Empfängern keine Vorfilter benötigt und die Empfänger können daher billiger hergestellt werden.

Bei einem erfindungsgemäßen Übertragungsverfahren werden zunächst modulierte Lichtsignale, die beispielsweise mittels einer direktmodulierten, breitbandigen Lichtquelle erzeugt werden, mit einem periodischen Senderfilter kodiert. Die kodierten Lichtsignale werden über ein Nachrichtenübertragungsnetz übertragen und in einem Empfänger wieder mittels des periodischen Filters dekodiert und mittels der Empfangseinheit in elektrische Signale umgewandelt. Vor dem Umwandeln, bevorzugt vor dem Dekodieren, wird das empfangene Nachrichtensignal mittels des Vorfilters gefiltert, der eine Vorfilterfunktion der vorstehend beschriebenen Charakteristik hat.

Bei diesem Übertragungsverfahren ergibt sich der besondere Vorteil, daß auch ohne Veränderung der Sender eine Verbesserung bezüglich des Nebensprechens erreicht wird. Ein weiterer Vorteil ist, daß eine engere Kanalzuteilung im Abstimmbereich zugelassen werden kann, was zu einer Erhöhung der maximal möglichen Senderanzahl und damit der Teilnehmerzahl im Netz führt.

**Patentansprüche**

1. Empfänger (R) für ein optisches Nachrichtenübertragungssystem zur Übertragung kodierter optischer Nachrichtensignale, mit einer optischen Empfangseinheit (PD) und einem dieser vorgeschalteten optischen Filtervorrichtung (Rx), die einen periodischen Filter (PRx) mit einer periodischen Filterfunktion hat,
   **dadurch gekennzeichnet, daß**
   die Filtervorrichtung (Rx) zusätzlich einen Vorfilter (VOR) mit einer Vorfilterfunktion hat, durch die das optische Frequenzspektrum des Nachrichtensignales in der Weise veränderbar ist, daß dessen Cosinustransformierte auf einen vorgebbaren Bereich einer Abstimmkurve begrenzt ist, welche die empfangene Gesamtleistung bei Durchstimmen der periodischen Filterfunktion angibt.

2. Empfänger (R) nach Anspruch 1, bei dem der periodische Filter (PRx) und der Vorfilter (VOR) zu einem einzigen Filter (Rx) kombiniert sind.

3. Empfänger (R) nach Anspruch 1, bei dem der Vorfilter (VOR) eine Vorfilterfunktion T(f) hat, die proportional ist zu (sin(f)/f)2 , wobei f die optische Frequenz ist.

4. Empfänger (R) nach Anspruch 1, bei dem durch die Vorfilterfunktion das optische Frequenzspektrum des Nachrichtensignales in der Weise verändert ist, daß die Einhüllende der Cosinustransformierten eine Rechteck- oder eine Trapezfunktion ist.

5. Empfänger (R) nach Anspruch 2, bei dem der einzige Filter (Rx) ein Fabry-Perot-Interferometer ist, bei dem die Vorfilterfunktion durch eine frequenzabhängige, teildurchlässige Verspiegelung realisiert ist.

6. Optische Filtervorrichtung (Rx) zur Verwendung in einem optischen Nachrichtenübertragungssystem zur Übertragung kodierter optischer Nachrichtensignale, die einen periodischen Filter (PRx) mit einer periodischen Filterfunktion hat, **gekennzeichnet durch**,
   einen zusätzlichen Vorfilter (VOR), der eine Vorfilterfunktion hat, **durch** die das optische Frequenzspektrum des Nachrichtensignales in der Weise veränderbar ist, daß dessen Cosinustransformierte auf einen vorgebbaren Bereich einer Abstimmkurve begrenzt ist, welche die empfangene Gesamtleistung bei Durchstimmen der periodischen Filterfunktion angibt.

7. Verfahren zum Übertragen von kodierten optischen Nachrichtensignalen in einem optischen Nachrichtenübertragungssystem, wobei das Nachrichtensignal in einem Sender (T) mittels eines Senderfilters (Tx) kodiert wird und in einem Empfänger (R) mittels eines periodischen Filters (PRx) dekodiert und mittels einer Empfangseinheit (PD) in ein elektrisches Signal umgewandelt wird,
   **dadurch gekennzeichnet,daß**
   das Nachrichtensignal vor dem Umwandeln mittels eines Vorfilters (VOR) mit einer Vorfilterfunktion gefiltert wird, die das optische Frequenzspektrum des Nachrichtensignales in der Weise verändert, daß dessen Cosinustransformierte auf einen vorgebbaren Bereich einer Abstimmkurve begrenzt ist, welche die empfangene Gesamtleistung bei Durchstimmen der periodischen Filterfunktion angibt.

**Claims**

1. Receiver (R) for an optical telecommunication system for the transmission of encoded optical communication signals, having an optical reception unit (PD) and an optical filter device (Rx) connected upstream thereof, which has a periodic filter (PRx) with a periodic filter function,
   **characterised in that**
   the filter device (Rx) also has a prefilter (VOR) with a prefilter function, by which the optical frequency spectrum of the communication signal can be modified so that its cosine transform is limited to a predeterminable region of the response curve which gives the total received power when tuning the periodic filter function.

2. Receiver (R) according to Claim 1, wherein the periodic filter (PRx) and the prefilter (VOR) are combined to form a single filter (Rx).

**3.** Receiver (R) according to Claim 1, wherein the prefilter (VOR) has a prefilter function T(f) which is proportional to $(\sin(f)/f)^2$, where f is the optical frequency.

**4.** Receiver (R) according to Claim 1, wherein the optical frequency spectrum of the communication signal is modified by the prefilter function so that the envelope of the cosine transform is a square-wave or trapezoidal function.

**5.** Receiver (R) according to Claim 2, wherein the single filter (Rx) is a Fabry-Perot interferometer, in which the prefilter function is formed by frequency-dependent semitransparent reflection.

**6.** Optical filter device (Rx) for use in an optical telecommunication system for the transmission of encoded optical communication signals, which has a periodic filter (PRx) with a periodic filter function, **characterised by** an additional prefilter (VOR), which has a prefilter function by which the optical frequency spectrum of the communication signal can be modified so that its cosine transform is limited to a predeterminable region of the response curve which gives the total received power when tuning the periodic filter function.

**7.** Method for the transmission of encoded optical communication signals in an optical telecommunication system, the communication signal being encoded in a transmitter (T) by means of a transmitter filter (Tx) and decoded in a receiver (R) by means of a periodic filter (PRx) and converted into an electrical signal by means of a reception unit (PD)
**characterised in that**
prior to conversion, the communication signal is filtered by means of a prefilter (VOR) with a prefilter function, which modifies the optical frequency spectrum of the communication signal so that its cosine transform is limited to a predeterminable region of the response curve which gives the total received power when tuning the periodic filter function.

**Revendications**

**1.** Récepteur (R) pour un système optique de transmission d'information pour la transmission de signaux d'information optiques et codés, avec une unité de réception (PD) optique et un dispositif de filtre (Rx) optique monté en amont de cette unité, qui a un filtre (PRx) périodique avec une fonction de filtre périodique,
**caractérisé en ce que**
le dispositif de filtre (Rx) a en supplément un préfiltre (VOR) avec une fonction de préfiltre, par laquelle le spectre optique de fréquences du signal d'information peut être modifié en ce sens que sa transformée de cosinus est limitée à une plage prédéfinissable d'une courbe de syntonisation, qui indique la puissance totale reçue en cas d'ajustage de la fonction de filtre périodique.

**2.** Récepteur (R) selon la revendication 1, sur lequel le filtre (PRx) périodique et le préfiltre (VOR) sont combinés pour former un filtre unique (Rx).

**3.** Récepteur (R) selon la revendication 1, sur lequel le préfiltre (VOR) a une fonction de préfiltre T(f), qui est proportionnelle à $(\sin(f)/f)^2$, f étant la fréquence optique.

**4.** Récepteur (R) selon la revendication 1, sur lequel le spectre optique de fréquences du signal d'information est modifié par la fonction de préfiltre en ce sens que l'enveloppante de la transformée de cosinus est une fonction rectangulaire ou une fonction trapézoïdale.

**5.** Récepteur (R) selon la revendication 2, sur lequel le filtre unique (Rx) est un interféromètre de Fabry-Perot, sur lequel la fonction de préfiltre est réalisée par une argenture semiperméable et dépendante de la fréquence.

**6.** Dispositif de filtre optique (Rx) pour une utilisation dans un système optique de transmission d'information pour la transmission de signaux d'information optiques codés qui a un filtre (PRx) périodique avec une fonction de filtre périodique, **caractérisé par** un préfiltre (VOR) supplémentaire, qui a une fonction de préfiltre, par laquelle le spectre optique de fréquences du signal d'information peut être modifié en ce sens que sa transformée de cosinus est limitée à une zone prédéfinissable d'une courbe de syntonisation qui indique la puissance totale reçue en cas d'ajustage de la fonction de filtre périodique.

7. Procédé pour la transmission de signaux d'information optiques codés dans un système optique de transmission d'information, le signal d'information étant codé dans l'émetteur (T) au moyen d'un filtre émetteur (Tx) et étant décodé dans le récepteur (R) au moyen d'un filtre (PRx) périodique et converti au moyen d'une unité de réception (PD) en un signal électrique,
**caractérisé en ce que**
le signal d'information est filtré avant la conversion au moyen d'un préfiltre (VOR) avec une fonction de préfiltre qui modifie le spectre de fréquence optique du signal d'information en ce sens que sa transformée du cosinus est limitée à une plage prédéfinissable d'une courbe de syntonisation, qui indique la puissance totale reçue en cas d'ajustage de la fonction de filtre périodique.

Fig.1

Fig.2

Fig.3

Fig.4

Fig.5

Fig.6

Fig.7

Fig.8